# EUROPEAN PATENT APPLICATION

(11) **EP 4 525 262 A1**
(43) Date of publication of application: **19.03.2025**
(21) Application number: 24197524.2
(22) Date of filing: 30.08.2024
(51) Int. Cl.: H02J 7/00

(54) **BATTERY CHARGER LOCKING SYSTEM**

(30) Priority: 30.08.2023 US 202363579569 P; 16.05.2024 US 202463648324 P
(71) Applicant: Milwaukee Electric Tool Corporation, Brookfield, WI 53005 (US)
(72) Inventor: VASHI, Bhaumik M., Shorewood, 53211 (US); HERRO, Matthew J, Pewaukee, 53072 (US); MADER, Daniel J., Milwaukee, 53202 (US); TURNER, Joshua A., Menomonee Falls, 53051 (US); KORBEL, Megan L., Wauwatosa, 53226 (US); ROBERTS, Veronica, Milwaukee, 53224 (US)
(74) Representative: Forresters IP LLP

(57) **Abstract**

A charger for use with a battery pack having a latch. The charger comprises a charging bay defining a battery path and a lock including a member retractably extending into the charging bay transverse to the battery path. The member is positioned to overlap with the latch in the battery path regardless of a position of the latch lateral to the path direction.

## Description

### CROSS-REFERENCE TO RELATED APPLICATIONS

The present application claims priority to U.S. provisional application no. 63/648,324, filed May 16, 2024, and to U.S. provisional application no. 63/579,569, filed August 30, 2023, the entire contents of both of which are incorporated by reference herein.

### BACKGROUND

The present disclosure relates to battery packs and chargers for charging battery packs.

A typical battery charger includes a battery charging circuit that is connectable to a power source and to a battery pack in order to charge the battery.

### SUMMARY

The present disclosure provides, according to a first aspect, a charger for use with a battery pack having a latch, the charger comprising a charging bay and a lock. The charging bay defines a battery path. The lock includes a member retractably extending into the charging bay transverse to the battery path. The member is positioned to overlap with the latch in the battery path regardless of a position of the latch lateral to the battery path.

The charger may further comprise an electric actuator configured to actuate the lock, wherein actuating the lock may extend the member into the charging bay.

The lock may include a wireless transceiver configured to wirelessly communicate commands and data between an electronic processor of the charger and a remote device.

The lock may include a user interface. Actuating the user interface may extend the member into the charging bay.

The user interface may be biased by a spring force toward an unlocked position in which the member may not extend into the charging bay.

The charger may further comprise a stop member configured to prevent the user interface from moving to the unlocked position automatically.

The stop member may pivot about a hinge and a lock aperture through which a lock projection extends, the lock projection may be configured to receive a padlock.

The charger may further comprise a housing including a lock projection extending in a direction along the battery path. The lock may include a user interface having a first bore defined therein. The lock projection may include a second bore defined therein. The first bore and the second bore may be alignable such that a padlock can be inserted therethrough.

The present disclosure provides, according to a second aspect, a charger for use with a battery pack having a latch, the charger comprising a charging bay and a lock. The charging bay defines a battery path. The lock includes a member extending along the battery path. The member is freely moveable in a first direction toward the charging bay such that the member is positionable to obstruct access to a user engagement portion of the latch. The first direction extends transverse to the battery path. The member is selectively moveable in a second direction upon disengagement of the lock, the second direction extending opposite the first direction.

The member may be substantially L-shaped and may include a first portion extending in the direction along the battery path and a second portion extending in a direction transverse to the battery path.

The second portion of the member may include a plurality of teeth defined thereon. The charger may further comprise a pawl in ratcheting engagement with the plurality of teeth.

The present disclosure provides, according to a third aspect, a charger for use with a battery pack, the charger comprising a charging bay and a lock. The charging bay defines a battery path. The lock includes a member extending in a lock direction transverse to the battery path. The member is moveable in a lock direction toward the charging bay, the member positionable to overlap with the battery path. The member is selectively moveable in an unlock direction extending opposite the lock direction.

The lock may include a plurality of teeth defined thereon. The charger may further comprise a pawl in ratcheting engagement with the plurality of teeth.

The pawl may be removable from engagement with the plurality of teeth.

The member may be configured to rotate about a member axis, the member axis extending in a direction transverse to the direction the member extends.

The member may include a wedge and a handle.

The lock may include a spring configured to bias the wedge in the unlock direction.

The unlock direction and the lock direction may be either opposing linear directions or opposing rotational directions.

The member may include a second member. The lock may further include a first member moveable into a position at least partially overlapping with the second member along the unlock direction.

The second member may further comprise a latch.

The first aspect may include one or more or all the features of the second and / or third aspects. The second aspect may include one or more or all the features of the first and / or third aspects. The third aspect may include one or more or all the feature of the first and / or second aspects. Other independent aspects of the disclosure will become apparent by consideration of the detailed description and accompanying drawings.

### BRIEF DESCRIPTION OF THE DRAWINGS

FIG. 1 is a perspective view of a charger according to a first construction.
FIG. 2 is another perspective view of the charger of FIG. 1.
FIG. 3 is a perspective view of a charging bay of FIG. 1.
FIG. 4 is another perspective view of the charging bay of FIG. 1.
FIG. 5 is a perspective view of a charger according to a second construction.
FIG. 6 is an interior perspective view of the charger of FIG. 5.
FIG. 7 is a perspective view of a lock of the charger of FIG. 5.
FIG. 8 is a perspective view of a charger according to a third construction.
FIG. 9 is a side view of a lock of the charger of FIG. 8.
FIG. 10 is a perspective view of a charger according to a fourth construction.
FIG. 11 is a perspective view of a lock of the charger of FIG. 10.
FIG. 12 is a cross-sectional view of the lock of the charger of FIG. 10.
FIG. 13 is a perspective view of a battery pack of a first type.
FIG. 14A is a rear perspective view of a battery pack of a second type.
FIG. 14B is a front perspective view of the battery pack of FIG. 14A.
FIG. 15 is a cross-sectional view of the battery pack of FIGS. 14A-14B along the line 15--15 of FIG. 14A.
FIG. 16A is a perspective view of a charger in a locked position according to a fifth construction.
FIG. 16B is another perspective view of the charger of FIG. 16A in an unlocked position.
FIG. 17A is a side view of a first embodiment of a lock of the charger of FIG. 16A in an unlocked position.
FIG. 17B is another side view of first embodiment of the lock of FIG. 16A in a locked position.
FIG. 18A is a side view of a second embodiment of a lock of the charger of FIG. 16A in an unlocked position.
FIG. 18B is another side view of the second embodiment of the lock of FIG. 16A in an unlocked position.
FIG. 19 is an interior perspective view of a lock of the charger of FIG. 16A.
FIG. 20A is a perspective view of a secondary charging bay of FIG. 16A in a locked position.
FIG. 20B is another perspective view of the secondary charging bay of FIG. 16A in an unlocked position.
FIG. 21A is a perspective view of a charging bay of FIG. 16A in a locked position.
FIG. 21B is another perspective view of the charging bay of FIG. 16A in an unlocked position.
FIG. 22A is a perspective view of a charger in a locked position according to a sixth construction.
FIG. 22B is another perspective view of the charger of FIG. 22A in an unlocked position.
FIG. 23 is a detailed illustration of a remote device for use with a charger and a battery pack.
FIG. 24 is a flow chart of a method of operation for locking a battery pack to a battery charger.
FIG. 25 is a continuation of the flow chart of the method of operation for locking a battery pack to a battery charger of FIG. 24.
FIG. 26 is a continuation of the flow chart of the method of operation for locking a battery pack to a battery charger of FIG. 24.
FIG. 27 is a side view of a lock of a charger according to a seventh construction.

### DETAILED DESCRIPTION

Before any independent constructions of the disclosure are explained in detail, it is to be understood that the disclosure is not limited in its application to the details of construction and the arrangement of components set forth in the following description or illustrated in the following drawings. The disclosure is capable of other independent constructions and of being practiced or of being carried out in various ways.

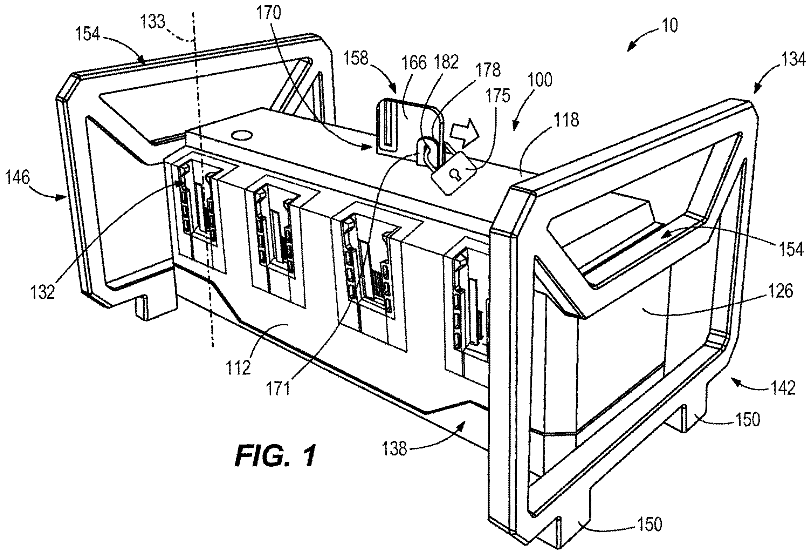

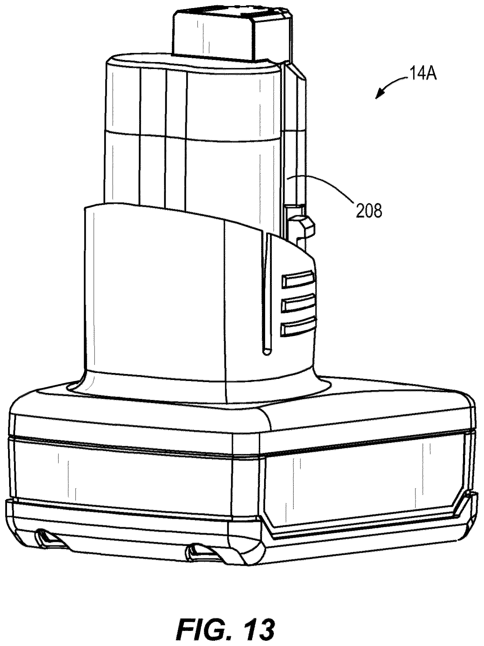

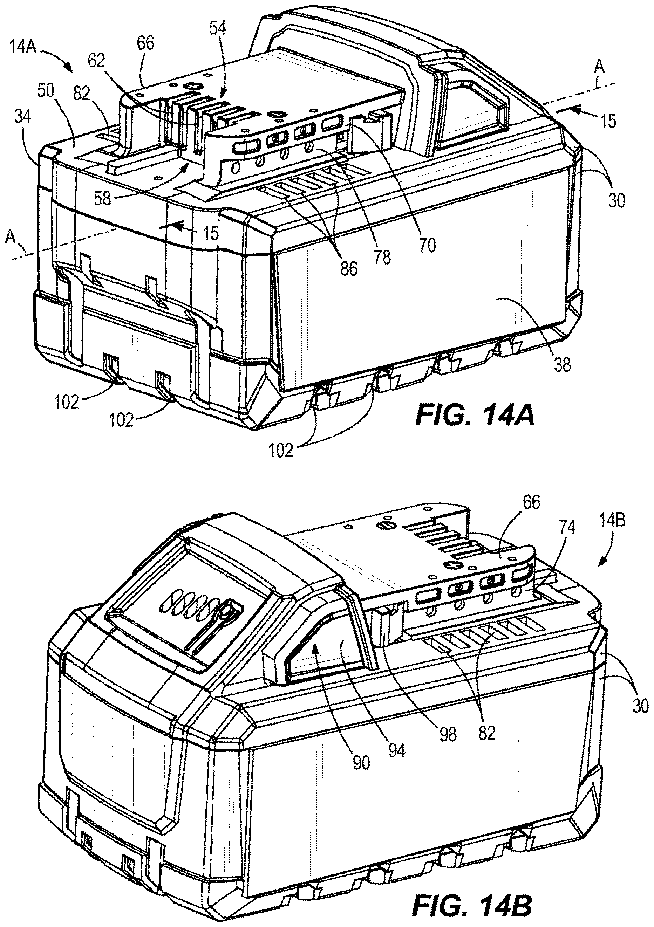

FIGS. 1-4 illustrate a charging system according to a first construction and including a battery charger 10 operable to charge a battery pack 14A, 14B (FIGS. 13-15) coupled to the charger 10. In the illustrated construction, the battery charger 10 is operable to charge a first battery pack 14A (FIG. 13) of a first type and a second battery pack 14B (FIGS. 14A-15) of a second type. The illustrated battery charger 10 may be operable to charge a high output battery pack (e.g., having a current capacity of 12 amp-hours (Ah) or more), which requires about 3 times the power of typical chargers, in about 60 minutes.

With reference to FIGS. 13-15, the battery pack type may be defined by nominal voltage, current capacity, connection configuration (e.g., "tower" vs. "slide-on"), etc., of the battery pack 14A, 14B. For example, the first battery pack 14A may include a high-power battery pack with a nominal voltage of about 12 volts (V) and having a tower-style configuration, and the second battery pack 14B may include a high-power battery pack with a nominal voltage of 18V and a slide-on configuration. In other constructions, the battery packs 14A, 14B may be the same type of battery pack.

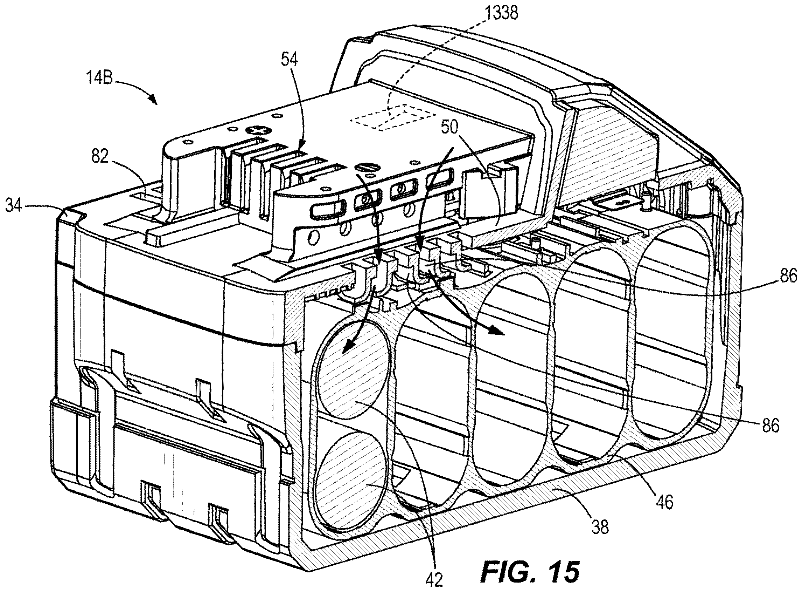

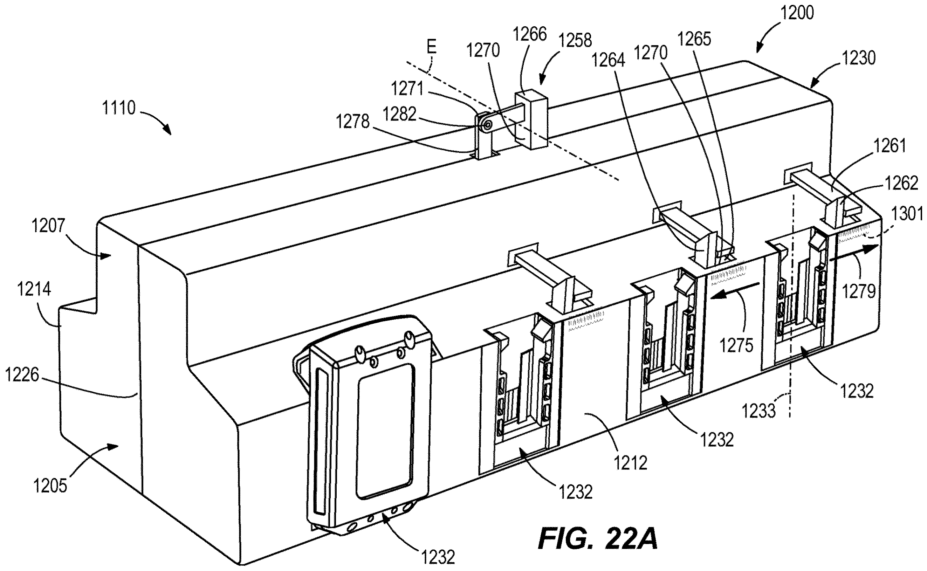

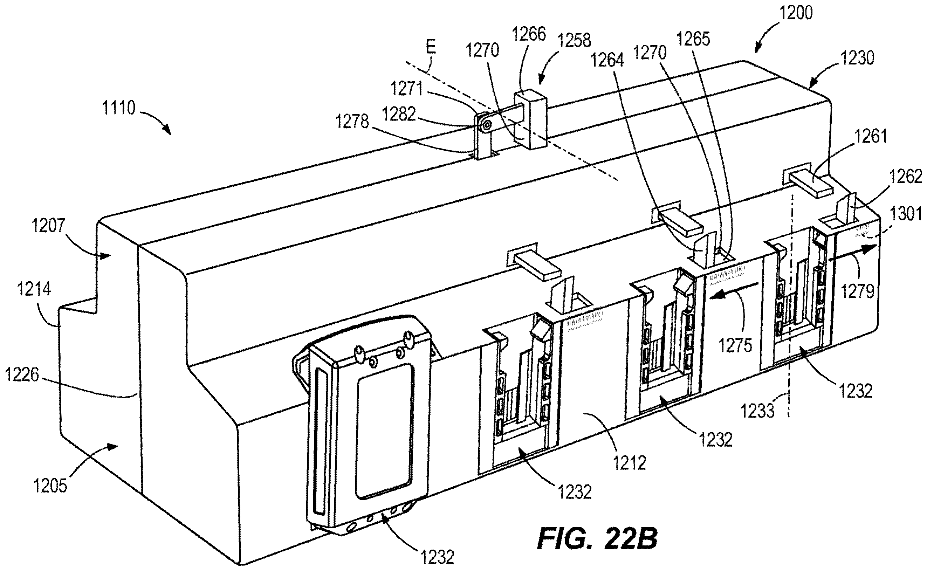

As shown in FIGS. 14A-15, the battery pack 14B may include a battery pack housing 30 including a longitudinal axis A, a first (e.g., top) portion 34, and a second (e.g., bottom) portion 38 that are coupled to the first portion 34. The housing 30 encloses a plurality of battery cells 42 that are secured within an interior of the housing by a battery holder 46 (FIG. 15). The housing 30 also encloses battery pack circuitry (not shown). The first portion 34 is symmetrical about the longitudinal axis A, engageable with the charger 18, and includes a wall 50 and a battery pack interface 54 that extends from the wall 50. The battery pack interface 54 includes a terminal block 58 with openings 62 extending therethrough that allow access to battery pack terminals (not shown) positioned within the housing 30. On opposite sides of the battery pack interface 54 are rails 66, 70 and grooves 74, 78 that are defined between the respective rail 66, 70 and the wall 50. The battery pack 14B further includes a latch mechanism 90 including a user engagement portion 94 and a latch 98. In the illustrated construction, there are two latch mechanisms 90 on opposite sides of the first portion 34, but in other constructions, there may be a single latch 99. The second portion 38 includes a plurality of holes (not shown) that allow communication between the interior of the battery pack 14B and outside of the battery pack 14B. Each battery pack 14A, 14B has a standardized latch geometry. In other embodiments (see FIG. 22), the battery pack 14A, 14B may not have the latch 98. Instead, the charger 18 may include the latch 98.

Each battery pack 14A, 14B is connectable to and operable to power various motorized power tools (e.g., a cut-off saw, a miter saw, a table saw, a core drill, an auger, a breaker, a demolition hammer, a compactor, a vibrator, a compressor, a drain cleaner, a welder, a cable tugger, a pump, etc.), outdoor tools (e.g., a chain saw, a string trimmer, a hedge trimmer, a blower, a lawn mower, etc.), other motorized devices (e.g., vehicles, utility carts, a material handling cart, etc.), and non-motorized electrical devices (e.g., a power supply, a light, an AC/DC adapter, a generator, etc.).

With reference to FIG. 1-2, the charger 10 has a charger housing 100 including a front wall 112, a rear wall 114, a top wall 118, a bottom wall 122, a first side wall 126, and a second side wall 130. The front wall 112 and the rear wall 114 each include a plurality of charging bays 132 configured to receive the battery pack 14A, 14B. The charging bays 132 define a battery insertion direction 133. The battery insertion direction 133 may also be referred to as a battery path. The first and the second side walls 126, 130 are spaced apart from one another, and a transverse axis B of the charger housing 100 is defined therebetween. The bottom wall 122, first side wall 126, and second side wall 130 are supported by a stand structure 134. The stand structure 134 includes a bottom support portion 138 extending along the transverse axis B. The stand structure 134 further includes a first side support section 142 and a second side support section 146 supporting the first side wall 126 and the second side wall 130, respectively. The first side support section 142 and the second side support section 146 are both substantially rectangular in shape and include a plurality of support feet 150. The first side support section 142 and the second side support section 146 each also include a handle portion 154 configured to allow a user to carry the charger 10. In the present embodiment, the charger housing 100 is made from a plastic material and the stand structure 134 is made from a metal material. In other embodiments, the charger housing 100 and the stand structure 134 may be made of a plurality of different materials (steel, aluminum, plastic, etc.). In some embodiments, the charger 10 may not be supported by the stand structure 134 and the stand structure 134 may be omitted. The charger housing 100 supports and partially houses a lock 158. The lock 158 includes a plurality of members 162 and a user interface 166. Each member 162 retractably extends into the charging bay 132. In the present embodiment, the charger 10 includes a plurality of members 162 and charging bays 132. In other embodiments, the charger 10 may only have a singular member 162 and a singular charging bay 132. In the present embodiment, the lock 158 further includes a padlock 175. In alternate embodiments, the lock 158 may be any type of lock that includes a shackle.

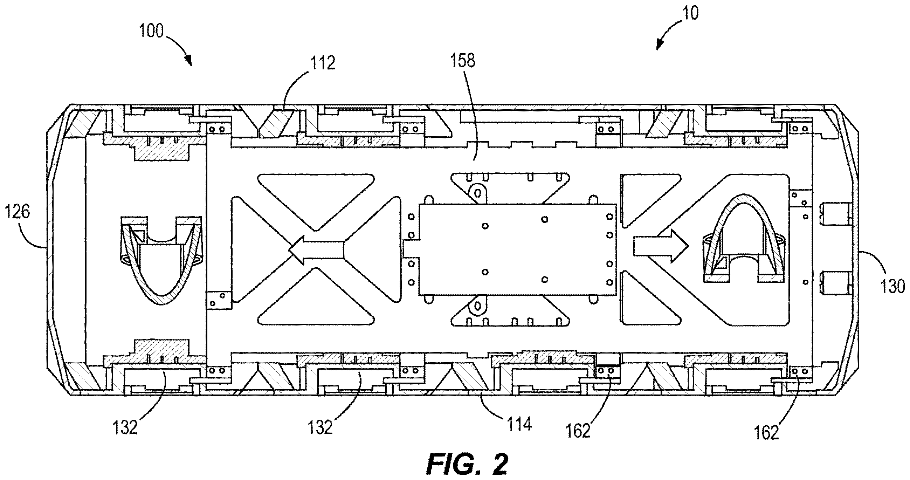

With continued reference to FIGS. 1 and 2, the top wall 118 includes a lock slot 170 extending along the transverse axis B. The user interface 166 protrudes from the charger housing 100 through the lock slot 170. The lock slot 170 is configured such that the user interface 166 can be slid between a locked position and an unlocked position. The user interface 166 includes a first bore 171 allowing for insertion of the padlock 175. The charger housing 100 includes a lock projection 178 extending transverse to the plane of the top wall 118 and lateral to the battery insertion direction 133. The lock projection 178 includes a second bore 182 allowing for insertion of the padlock 175. The user interface 166 is positionable so that a user can slide the user interface 166 to the locked position such that the first bore 171 and the second bore 182 align and the member 162 extends into the charging bay 132. In this position, the user can insert and lock the padlock 175, preventing the user interface 166 from being slid to the unlocked position in which the first bore 171 and the second bore 182 are no longer aligned.

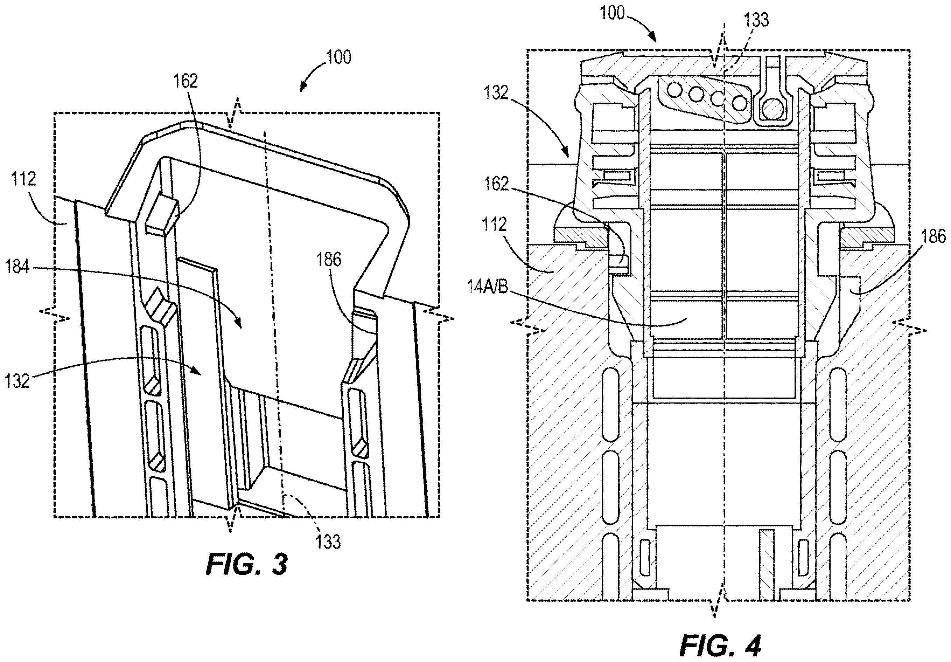

With reference to FIGS. 3 and 4, the charging bay 132 is configured to receive the battery pack 14A, 14B. The charging bay 132 may include a plurality of rails and grooves 184 configured to correspond to the rails 66, 70 and grooves 74, 78 of the battery pack 14A, 14B. The charging bay 132 includes a notch 186 defined therein configured to receive the latch 98. The notch 186 is configured to resist removal of the battery pack 14A, 14B unless the user engagement portion 94 is depressed. Actuating the user interface 166 to the locked position extends the member 162 into the charging bay 132. In the locked position, the member 162 extends transverse to the battery insertion direction 133 and is positioned to overlap with the latch 98 in the battery insertion direction 133 regardless of a position of the latch 98 lateral to the battery insertion direction (i.e., when the user depresses the user engagement portion 94). When the lock 158 is in the unlocked position and the user depresses the user engagement portion 94, the battery pack 14A, 14B can be removed from the charging bay 132. When the lock 158 is in the locked position and the user depresses the user engagement portion 94, the member 162 abuts the latch 98 of the battery pack 14A, 14B and blocks the removal of the battery pack 14A, 14B from the charging bay 132. In the present embodiment, when the lock 158 is in the locked position, all members 162 extend into their respective charging bay 132, preventing any inserted battery packs 14A, 14B from being removed. In alternate embodiments, individual battery packs 14A, 14B may be locked and unlocked independently. In some embodiments, the member 162 may be spring loaded or biased by a spring.

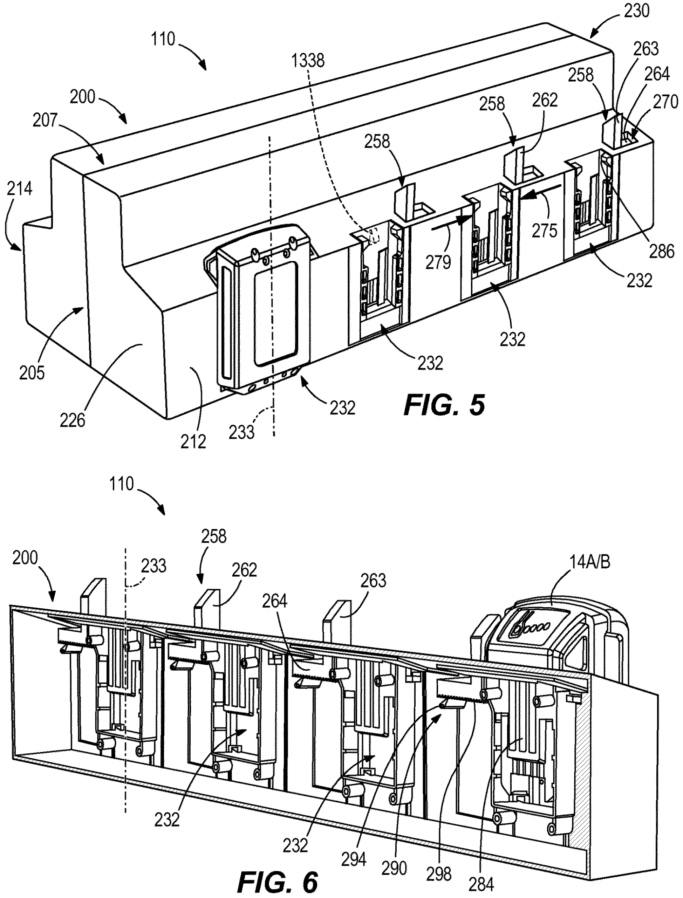

FIGS. 5-7 illustrate a charger according to another embodiment of the disclosure. The charger 110 is like the charger 10 shown in FIG. 1 and described above. Therefore, like features are identified with like references numerals plus "100", and only the differences between the two will be discussed.

With reference to FIG. 5, the charger 110 has a charger housing 200 including a bottom portion 205 and a top portion 207. The bottom portion 205 is a trapezoidal prism in shape and includes a front wall 212, and a rear wall 214. The top portion 205 is a rectangular prism in shape. The charger housing 200 further includes a first side wall 226 and a second side wall 230. The front wall 212 and the rear wall 214 each include a plurality of charging bays 232 each configured to receive the battery pack 14A, 14B. The charging bays 232 define a battery insertion direction 233. The battery insertion direction 233 may also be referred to as a battery path. The charger housing 200 supports and partially houses a plurality of locks 258 corresponding to each charging bay 232. In alternate embodiments, the charger housing 200 may only include one lock 258 and one charging bay 232. Each lock 258 includes a member 262 that is substantially L-shaped. In other embodiments, the member 262 may be a different shape. The member 262 includes a first portion 263 extending along the battery insertion direction 233 and a second portion 264 extending transverse to the battery insertion direction 233. The first portion 263 protrudes from the charger housing 200 and extends from the bottom portion 205 through a lock slot 270. The lock slot 270 is configured such that the member 262 can be slid in a first direction 275, or lock direction, toward the battery pack 14A, 14B and a second direction 279, or unlock direction, away from the battery pack 14A, 14B. The first direction 275 extends transverse to the battery insertion direction 233. The second direction 279 extends opposite the first direction 275. In some embodiments, the first direction 275 and the second direction 279 may be linear directions.

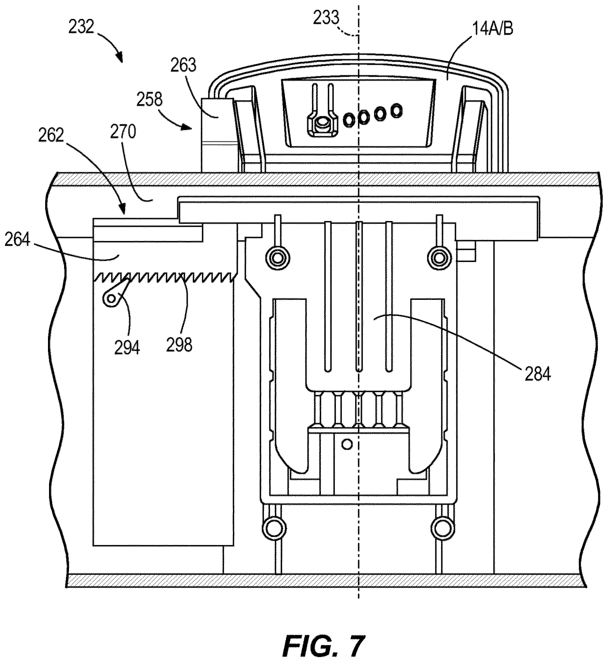

With reference to FIGS. 6 and 7, the charging bay 232 is configured to receive the battery pack 14A, 14B. The charging bay 232 may include a plurality of rails and grooves 284 configured to correspond to the rails 66, 70 and grooves 74, 78 of the battery pack 14A, 14B. The charging bay 232 includes a notch 286 defined therein configured to receive the latch 98. The notch 286 is configured to resist removal of the battery pack 14A, 14B unless the user engagement portion 94 is depressed. Actuating the first portion 263 in the first direction 275 extends the member 262 toward the charging bay 232, obstructing user access to the user engagement portion 94 (i.e., a user cannot depress the user engagement portion to release the latch 98 from the notch 286).

In the present embodiment, the lock 258 includes a ratchet mechanism 290. The ratchet mechanism 290 includes the second portion 264 and a pawl 294. The second portion 264 includes a plurality of teeth 298 which engage with the pawl 294. The teeth 298 are angled to correspond with the angle of the pawl 294. The teeth 298 and the pawl 294 engage such that the member 262 is freely moveable within the lock slot 270 in the first direction 275 and the member 262 is selectively moveable in the second direction 279 upon disengagement of the lock 258. When the lock 258 is engaged, the pawl 294 is engaged with the teeth 298, causing the member 262 to resist movement in the second direction 279. The pawl 294 may be disengaged from the teeth 298 in a plurality of ways. The pawl 294 may be rotated in a clockwise direction to disengaged from the teeth 298. In alternate embodiments, the pawl 294 may be translated axially along the battery insertion direction 233 or transverse to the battery insertion direction 233 to disengage from the teeth 298. The charger housing 200 may also include a button or user engagement portion to disengage the pawl 294 from the teeth 298. In the present embodiment, each charging bay 232 includes an individual lock 258 and corresponding ratchet mechanism 290. Each pawl 294 may be disengaged individually or all at once.

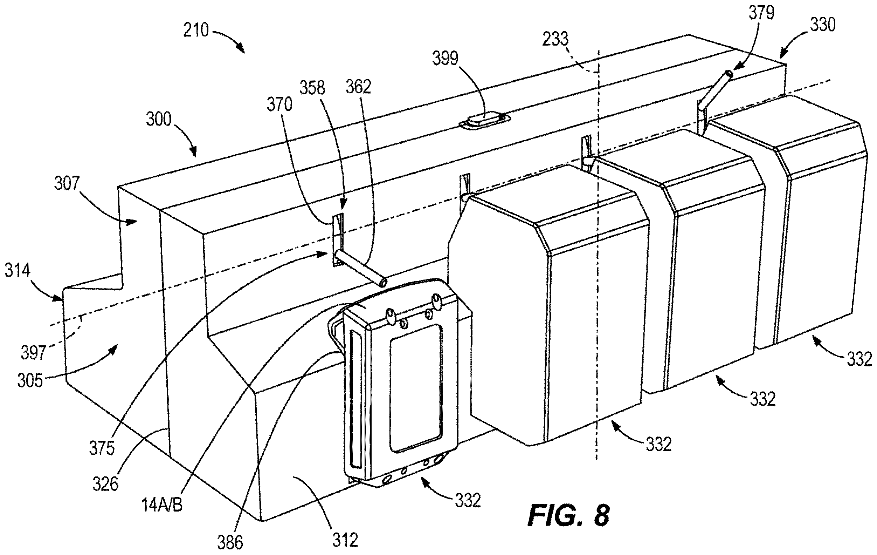

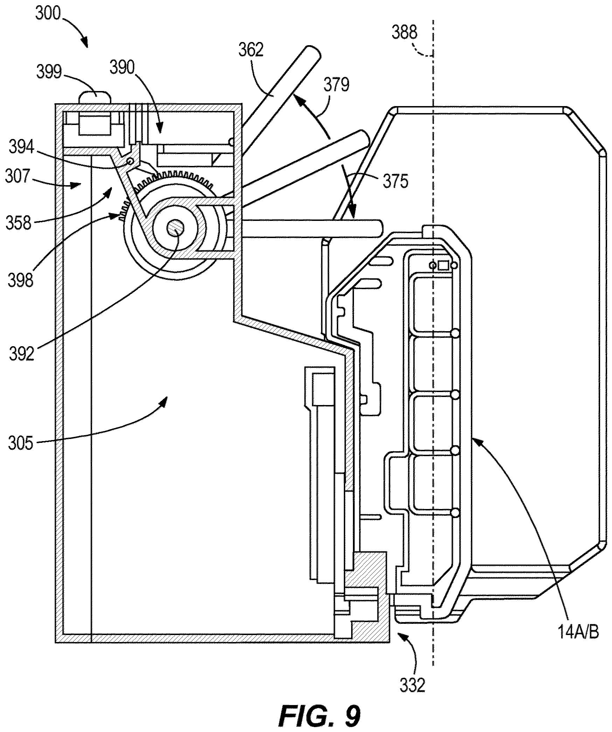

FIGS. 8 and 9 illustrate a charger according to another embodiment of the disclosure. The charger 210 is like the charger 110 shown in FIG. 5 and described above. Therefore, like features are identified with like references numerals plus "100", and only the differences between the two will be discussed.

With reference to FIG. 8, the charger 210 has a charger housing 300 including a bottom portion 305 and a top portion 307. The bottom portion 305 includes a front wall 312, and a rear wall 314. The charger housing 300 further includes a first side wall 326 and a second side wall 330. The first and the second side walls 326, 330 are spaced apart from one another, and a transverse axis C of the charger housing 300 is defined therebetween. The front wall 312 and the rear wall 314 each include a plurality of charging bays 332 each configured to receive the battery pack 14A, 14B. The charging bays 332 define a battery insertion direction 333. The battery insertion direction 333 may also be referred to as a battery path. The charger housing 300 supports and partially houses a plurality of locks 358 corresponding to each charging bay 332. In alternate embodiments, the charger 210 may only include one lock 358 and one charging bay 332. The lock 358 includes a member 362 that extends from the top portion 307 through a lock slot 370. The member 362 extends transverse to the battery insertion direction 333. The locking slot 370 is configured such that the user interface can be moved in a first direction 375, or lock direction, toward the charging bay 332 and a second direction 379, or unlock direction, away from the charging bay 332. The first direction 375 extends transverse to the battery insertion direction 333. The second direction 379 extends opposite the first direction 375.

With reference to FIGS. 8 and 9, the charging bay 332 is configured to receive the battery pack 14A, 14B. The charging bay 332 may include a plurality of rails and grooves configured to correspond to the rails 66, 70 and grooves 74, 78 of the battery pack 14A, 14B. The charging bay 332 includes a notch 386 defined therein configured to receive the latch 98. The notch 386 is configured to resist removal of the battery pack 14A, 14B unless the user engagement portion 94 is depressed. Actuating the member 362 in the first direction 375 extends the member 362 toward the charging bay 332, obstructing a battery removal path 388 (i.e., a user cannot remove the battery pack 14A, 14B along the battery insertion direction 333 because the member 362 is blocking the path 388).

In the present embodiment, the lock 358 is a thin bar and includes a ratchet mechanism 390. In the present embodiment, each charging bay 332 includes an individual lock 358 and corresponding ratchet mechanism 390. The ratchet mechanism 390 includes a member support portion 392 and a pawl 394. The member support portion 392 includes a plurality of teeth 398 which engage with the pawl 394. The member support portion 392 supports the member 362 and is configured to rotate about a member axis 397. The member axis 397 is located along the transverse axis C and is transverse to the battery insertion direction 333. In alternate embodiments, the member support portion 392 may be a plurality of different shapes. The teeth 398 are angled to correspond with an angle of the pawl 394. The teeth 398 and the pawl 394 engage such that the member 362 is freely moveable within the locking slot 370 in the first direction 375 and the member is selectively moveable in the second direction 379 upon disengagement of the lock 358. When the lock 358 is engaged, the pawl 394 is engaged with the teeth 398, causing the member 362 to resist movement in the second direction 379. The pawl 394 may be actuated by a user and disengaged from the teeth 398 in a plurality of ways. In the present embodiment, the charger housing 300 includes a button 399 to disengage the pawl 394 from the teeth 398. The button 399 is connected to the pawl 394 such that the pawl 394 is cantilevered on the button 399. When a user depresses the button 399, the button 399 biases the pawl 394 to disengage from the teeth 398 on the member support portion 392. Each pawl 394 may be disengaged individually or all at once.

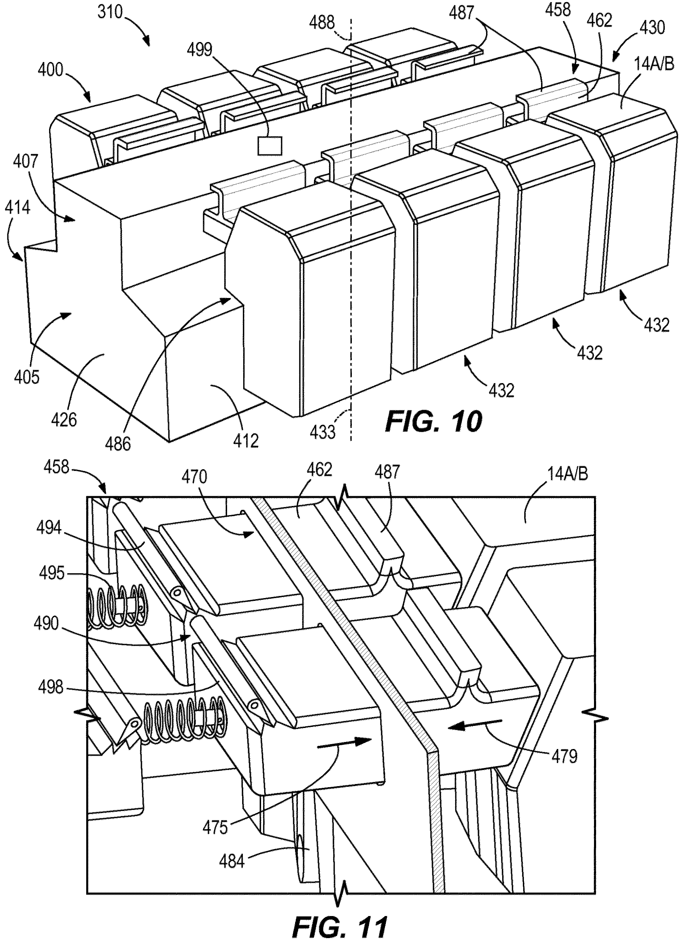

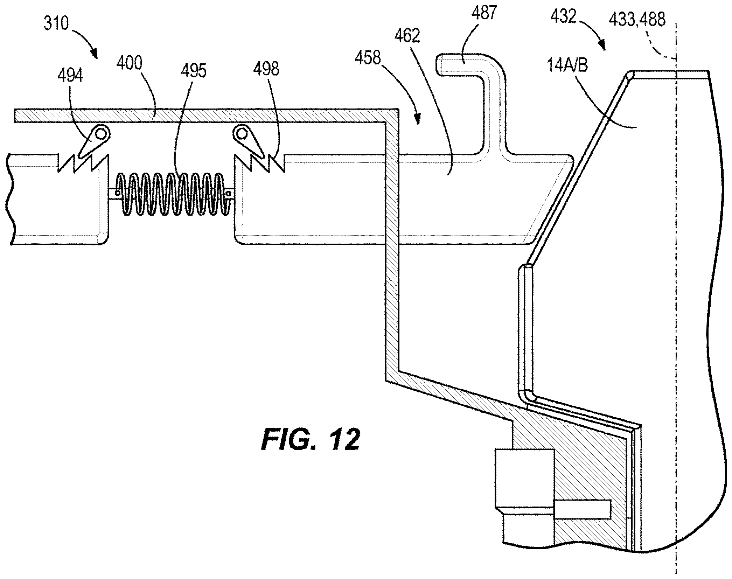

FIGS. 10-12 illustrate a charger according to another embodiment of the disclosure. The charger 310 is like the charger 210 shown in FIG. 8 and described above. Therefore, like features are identified with like references numerals plus "100", and only the differences between the two will be discussed.

With reference to FIG. 10, the charger 310 has a charger housing 400 including a bottom portion 405 and a top portion 407. The bottom portion 405 includes a front wall 412, and a rear wall 414. The charger housing 400 further includes a first side wall 426 and a second side wall 430. The first and the second side walls 426, 430 are spaced apart from one another. The front wall 412 and the rear wall 414 each include a plurality of charging bays 432 each configured to receive the battery pack 14A, 14B. The charging bays 432 define a battery insertion direction 433. The battery insertion direction 433 may also be referred to as a battery path. The charger housing 400 supports and partially houses a plurality of locks 458 corresponding to each charging bay 432. The lock 458 includes a member (e.g., wedge) 462 that extends from the top portion 407 through a lock slot 470. The member 462 extends transverse to the battery insertion direction 433. The locking slot 370 is configured such that the user interface can be moved in a first direction 475, or lock direction, toward the battery pack 14A, 14B and a second direction 479, or unlock direction, away from the battery pack 14A, 14B. The first direction 475 extends transverse to the battery insertion direction 433. The second direction 479 extends opposite the first direction 475.

With reference to FIGS. 10 and 11, the charging bay 432 is configured to receive the battery pack 14A, 14B. The charging bay 432 may include a plurality of rails and grooves 484 configured to correspond to the rails 66, 70 and grooves 74, 78 of the battery pack 14A, 14B. The charging bay 432 includes a notch 486 defined therein configured to receive the latch 98. The notch 486 is configured to resist removal of the battery pack 14A, 14B unless the user engagement portion 94 is depressed. In the present embodiment, the member 462 is a wedge including a handle 487. The handle 487 is configured to be engaged by a user to slide the wedge 462 in the first direction 475 and the second direction 479. Actuating the wedge 462 in the first direction 475 extends the wedge 462 toward the charging bay 432, obstructing a battery removal path 488 (i.e., a user cannot remove the battery pack 14A, 14B along the battery insertion direction 433 because the wedge 462 is blocking the path 488).

In the present embodiment, the lock 458 includes a ratchet mechanism 490. The ratchet mechanism 490 includes a pawl 494. The member 462 includes a plurality of teeth 498 which engage with the pawl 494. The teeth 498 are angled to correspond with an angle of the pawl 494. The teeth 498 and the pawl 494 engage such that the member 462 is freely moveable within the lock slot 470 in the first direction 475 and the member 462 is selectively moveable in the second direction 479 upon disengagement of the lock 458. When the lock 458 is engaged, the pawl 494 is engaged with the teeth 498, causing the member 462 to resist movement in the second direction 479. The engagement of the pawl 494 and the teeth 498 allows the wedge 462 to be slid varying distances to accommodate for battery packs 14A, 14B of various sizes. The pawl 494 may be actuated by a user to disengage from the teeth 498 in a plurality of ways. In the present embodiment, the housing 400 includes a button 499 or user engagement portion to disengage the pawl 494 from the teeth 498. The button 499 is connected to the pawl 494 such that the pawl 494 is cantilevered on the button 499. When a user depresses the button 499, the button 499 biases the pawl 494 to disengage from the teeth 498. Each pawl 494 may be disengaged individually or all at once. In the present embodiment, each charging bay 432 includes an individual lock 458 and corresponding ratchet mechanism 490. In other embodiments, the charger 310 may only include one charging bay 432 and one lock 458. A spring 495 is provided in the top portion 407 of the housing 400 to bias the wedge 462 in the second direction 479 such that when the pawl 494 is disengaged, the wedge 462 moves in the second direction 479 and recedes into the top portion 407 of the housing 400. When the pawl 494 is engaged with the teeth 498, the engagement between the pawl 494 and the teeth 498 prevents the wedge 462 from being biased by the spring 495 in the second direction 479.

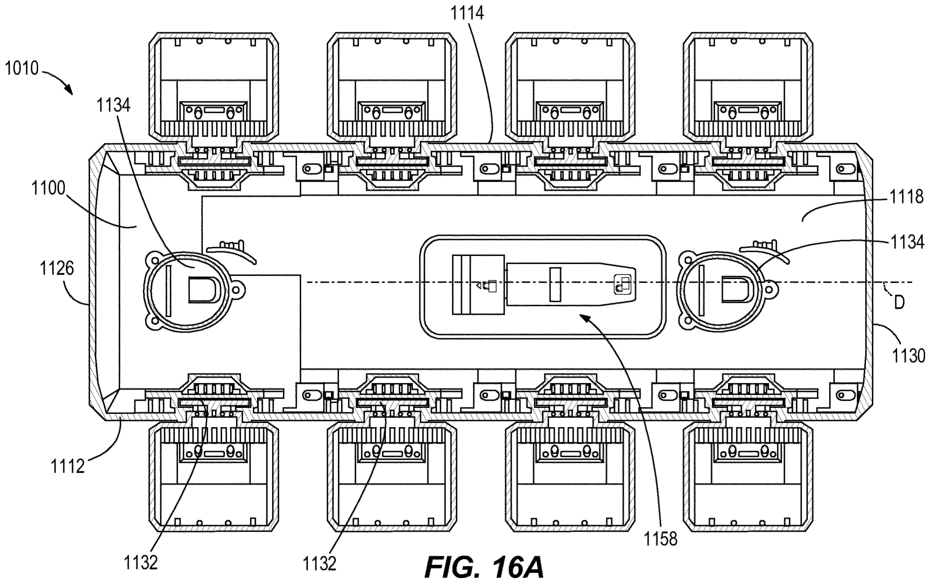

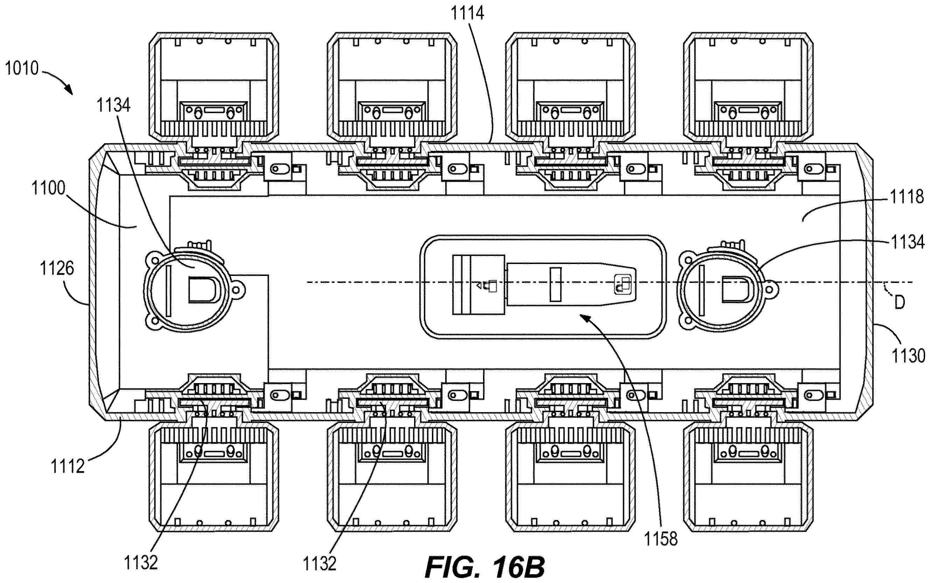

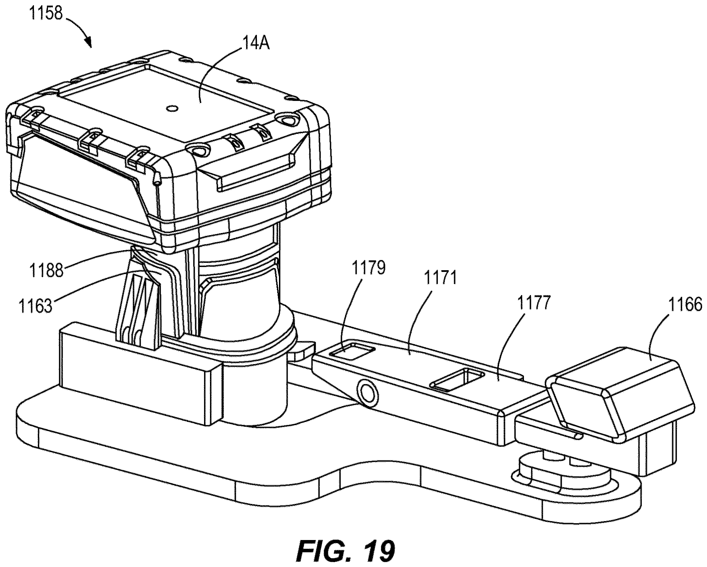

FIGS. 16A-21B illustrate a charger according to another embodiment of the disclosure. The charger 1010 is like the charger 10 shown in FIG. 1 and described above. Therefore, like features are identified with like references numerals plus "1000", and only the differences between the two will be discussed.

With reference to FIGS. 16A-17B, the charger 1010 has a charger housing 1100 including a front wall 1112, and a rear wall 1114, a top wall 1118, a side wall 1126 and a second side wall 1130. The front wall 1112 and the rear wall 1114 each include a plurality of charging bays 1132 each configured to receive the battery pack 14A, 14B. The charging bays 1132 define a battery insertion direction 1133. The battery insertion direction 1133 may also be referred to as a battery path. The top wall 1118 further includes a plurality of secondary charging bays 1134 each configured to receive the battery pack 13. The secondary charging bays 1134 have the same battery insertion direction 1133 as the charging bays 1132. The top wall 1118 supports and partially houses a lock 1158. The lock 1158 includes a plurality of members 1162, a plurality of secondary members 1163, and a user interface 1166. Each member 1162 retractably extends into the charging bay 132. In the present embodiment, the charger 1010 includes a plurality of members 1162 and charging bays 1132. In other embodiments, the charger 1010 may only have a singular member 1162 and a singular charging bay 1132. In the present embodiment, the lock 1158 further includes a padlock 1175. In alternate embodiments, the lock 1158 may be any type of lock that includes a shackle.

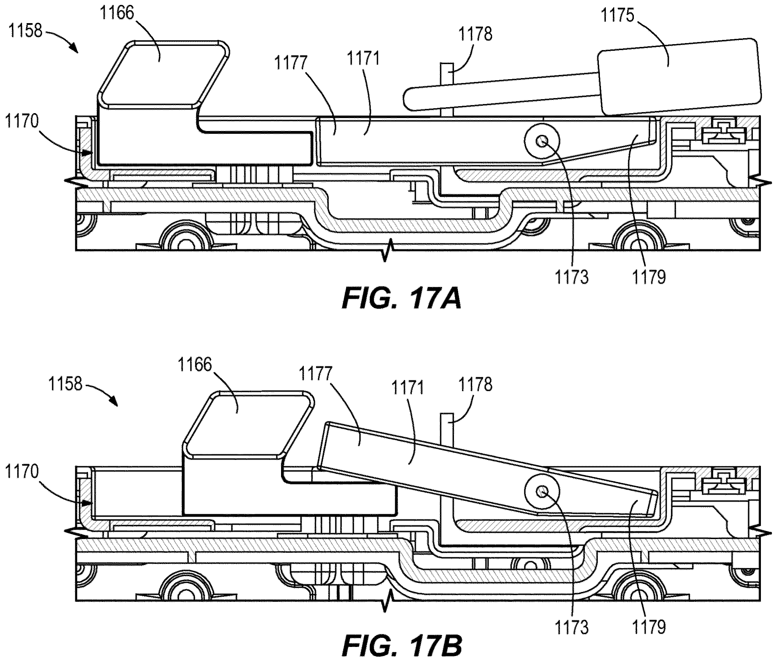

With reference to FIGS. 17A-20B, the top wall 1118 includes a lock slot 1170 extending along a transverse axis D. The user interface 1166 protrudes from the charger housing 1100 through the lock slot 1170. The lock slot 1170 is configured such that the user interface 1166 can be slid between a locked position and an unlocked position. The user interface 1166 is biased by a spring force toward the unlocked position but is prevented from moving to the unlocked position automatically by a stop member 1171 disposed within the lock slot 1170. The stop member 1171 pivots about a hinge 1173 and is biased by a spring force to a flat, or not pivoted position. The stop member 1171 includes a first end 1177 and a second end 1179. The charger housing 1100 includes a lock projection 1178 extending transverse to the plane of the top wall 1118 and lateral to the battery insertion direction 1133. The lock projection 1178 includes a bore 1182 allowing for insertion of the padlock 1175. The stop member 1171 further includes a lock aperture 1176, through which the lock projection 1178 extends.

When the padlock 1175 is not inserted through the bore 1182, the user interface 1166 is positionable so that a user can slide the user interface 1166 to the locked position and to the unlocked position. To slide the user interface 1166 to the unlocked position, the user can push down, in a direction transverse to the top wall 1118, on the second end 1179 of the stop member 1171. When the second end 1179 of the stop member 1171 is pushed down by the user, the stop member 1171 pivots about the hinge 1173 which allows for the user interface 1166 to slide to the unlocked position. When the stop member 1171 pivots about the hinge 1173, the stop member 1171 blocks the bore 1182, preventing the user from inserting the padlock 1175.

When the user interface 1166 is in the locked position, the user interface 1166 abuts the stop member 1171. In this position, the stop member 1171 is flat, extending along the top wall 1118 and the member 1162 extends into the charging bay 1132. The user can insert the padlock 1175 through the bore 1182 and lock the padlock 1175. Inserting and locking the padlock 1175 prevents the stop member 1171 from pivoting, therefore blocking the user interface 1166 from being slid to the unlocked position. Additionally, when in the locked position, the secondary member 1162 extends over a latch 1188 of the battery 14A to block the user from depressing the latch 1188.

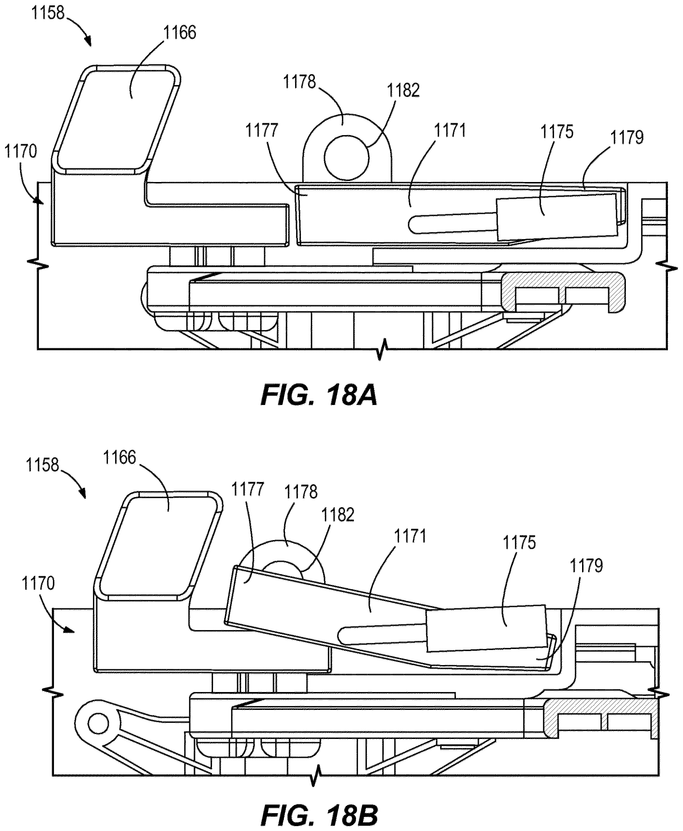

In alternate embodiments, such as the embodiment shown in FIGS. 18A and 18B, the stop member 1171 may not include a lock aperture 1176, and instead, the lock projection 1178 may be on a side of the stop member 1171. In this case, the lock projection 1178 is positioned such that inserting and locking the padlock 1175 prevents the stop member 1171 from pivoting, blocking the user interface 1166 from being slid to the unlocked position.

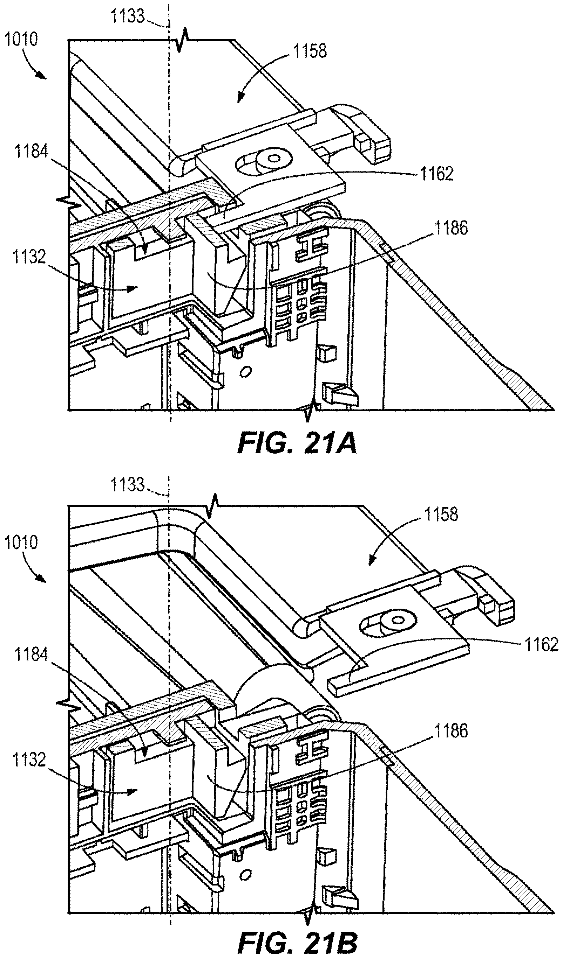

With reference to FIGS. 21A and 21B, the charging bay 1132 is configured to receive the battery pack 14A, 14B. The charging bay 1132 may include a plurality of rails and grooves 1184 configured to correspond to the rails 66, 70 and grooves 74, 78 of the battery pack 14A, 14B. The charging bay 1132 includes a notch 1186 defined therein configured to receive the latch 98. The notch 1186 is configured to resist removal of the battery pack 14A, 14B unless the user engagement portion 94 is depressed. Actuating the user interface 1166 to the locked position extends the member 1162 into the charging bay 1132. In the locked position, the member 1162 extends transverse to the battery insertion direction 1133 and is positioned to overlap with the latch 98 in the battery insertion direction 1133 regardless of a position of the latch 98 lateral to the battery insertion direction 1133(i.e., when the user depresses the user engagement portion 94). When the lock 1158 is in the unlocked position and the user depresses the user engagement portion 94, the battery pack 14A, 14B can be removed from the charging bay 1132. When the lock 1158 is in the locked position and the user depresses the user engagement portion 94, the member 1162 abuts the latch 98 of the battery pack 14A, 14B and blocks the removal of the battery pack 14A, 14B from the charging bay 1132. In the present embodiment, when the lock 1158 is in the locked position, all members 1162 extend into their respective charging bay 1132, preventing any inserted battery packs 14A, 14B from being removed. In alternate embodiments, individual battery packs 14A, 14B may be locked and unlocked independently.

FIGS. 22A and 22B illustrate a charger according to another embodiment of the disclosure. The charger 1110 is like the charger 110 shown in FIG. 5 and described above. Therefore, like features are identified with like references numerals plus "1000", and only the differences between the two will be discussed.

The charger 1110 has a charger housing 1200 including a bottom portion 1205 and a top portion 1207. The bottom portion 1205 includes a front wall 1212, and a rear wall 1214. The charger housing 1200 further includes a first side wall 1226 and a second side wall 1230. The front wall 1212 and the rear wall 1214 each include a plurality of charging bays 1232 each configured to receive the battery pack 14A, 14B. The charging bays 1232 define a battery insertion direction 1233. The battery insertion direction 1233 may also be referred to as a battery path.

The charger housing 1200 supports and partially houses a lock 1258. The lock 1258 includes a user interface 1266, a plurality of first members 1261, and a plurality of second members 1262. The top portion 1207 includes a lock slot 1270 extending along a transverse axis E. The user interface 1266 protrudes from the charger housing 1200 through the lock slot 1270. The lock slot 1270 is configured such that the user interface 1266 can be slid between a locked position and an unlocked position. The user interface 1266 includes a first bore 1271 allowing for insertion of a padlock. The charger housing 1200 includes a lock projection 1278 extending transverse to the plane of the top portion 1207 and lateral to the battery insertion direction 1233. The lock projection 1278 includes a second bore 1282 allowing for insertion of a padlock. The user interface 1266 is positionable so that a user can slide the user interface 1266 to the locked position such that the first bore 1271 and the second bore 1282 align and the first member 1261 is extended from the top portion 1207. In this position, the user can insert and lock the padlock, preventing the user interface 1266 from being slid to the unlocked position in which the first bore 1271 and the second bore 1282 are no longer aligned.

Each first member 1261 is retractably extended from the top portion 1207 via the user interface 1266. Therefore, when the user interface 1266 is slid to the locked position, the first members 1261 extend from the top portion 1207 and into a movement path of the second members 1262 (see FIG. 22A). When the user interface 1266 is slid to the unlocked position, the first members 1261 are retracted into the top portion 1207 and out of the movement path of the second members 1262 (see FIG. 22B).

The second members 1262 include a first portion 1264 extending along the battery insertion direction 1233 and a second portion 1265 extending transverse to the battery insertion direction 1233. The first portion 1264 protrudes from the charger housing 1200 and extends from the bottom portion 1205 through a slot 1270. The slot 1270 is configured to define the movement path of the second member 1262 such that the second member 1262 can be slid in a first direction 1275, or lock direction, toward the battery pack 14A, 14B and a second direction 1279, or unlock direction, away from the battery pack 14A, 14B. The first direction 1275 extends transverse to the battery insertion direction 1233. The second direction 1279 extends opposite the first direction 1275. A spring 1301 abuts the second portion 1265. The spring 1301 is configured to bias the second member 1262 in the first direction 1275.

The second portion 1265 includes a latch 1305 configured to be received by a notch in the battery pack 14A, 14B. The latch 1305 is configured to resist removal of the battery pack 14A, 14B unless a user actuates the first portion 1264 in the second direction 1279. By default, the spring 1301 biases the second member 1262 such that the latch 1305 extends into the charging bay 1132 to be received by the notch in the battery pack 14A, 14B. When the lock 1158 is in the unlocked position and the user actuates the first portion 1264 in the second direction 1279, the battery pack 14A, 14B can be removed from the charging bay 132. When the lock 158 is in the locked position, the first member 1261 prevents the user from actuating the first portion 1264 in the second direction 1279, preventing removal of the battery pack 14A, 14B from the charging bay 132. In the present embodiment, when the user interface 1266 is in the locked position, all first members 1262 extend across the movement paths of the second members 1262, preventing any inserted battery packs 14A, 14B from being removed. In alternate embodiments, individual battery packs 14A, 14B may be locked and unlocked independently.

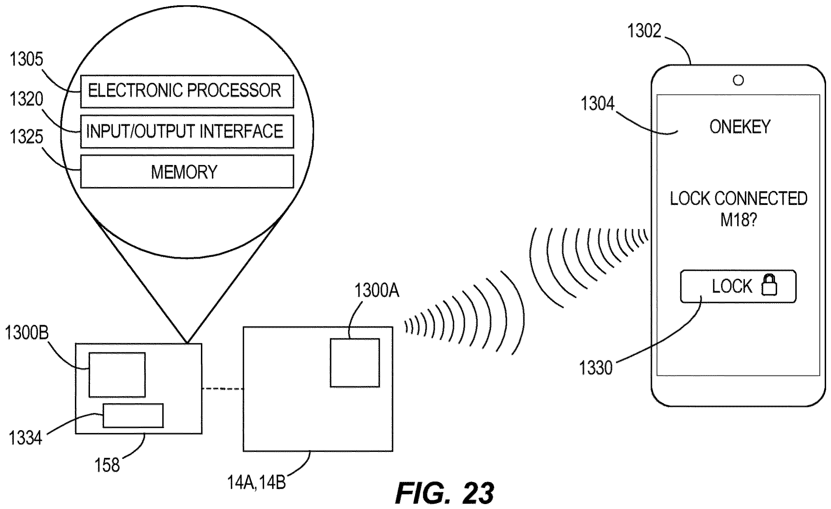

With reference to FIG. 23, the lock 158, 258, 358, 458, 1158, 1258 of each of the previous embodiments may not be actuated mechanically and may instead be actuated by an electric actuator 1334 (e.g., an electric motor, solenoid, etc.). Both the lock 158, 258, 358, 458, 1158, 1258 and the battery pack 14A, 14B may include a wireless transceiver 1300A, 1300B to wirelessly communicate commands and data between an electronic processor 1315 of the lock 158, 258, 358, 458, 1158, 1258 and a remote device 1302 (e.g., a user's smartphone, tablet, laptop, computer, etc.). For example, the lock 158, 258, 358, 458, 1158, 1258 may also be integrated with a tool management application 1304 using Bluetooth^{®} enabled tags, such as Milwaukee Tool's ONE-KEY^{™} system.

In some instances, the lock 158, 258, 358, 458, 1158, 1258 also includes the electronic processor 1315, an input/output interface 1320, and a memory storage 1325. In some examples, the electronic processor 1315 is implemented as a microprocessor with separate memory, for example the memory storage 1325. In other examples, the electronic processor 1315 may be implemented as a microcontroller (with memory storage 1325 on the same package). In other examples, the electronic processor 1315 may be implemented using multiple processors. In addition, the electronic processor 1315 may be implemented partially or entirely as, for example, a field-programmable gate array (FPGA), an applications specific integrated circuit (ASIC), and the like and the memory storage 1325 may not be needed or be modified accordingly. In some examples, the memory storage 1325 includes non-transitory, computer-readable memory that stores instructions that are received and executed by the electronic processor 1315 to carry out methods described herein.

The memory storage 1325 may include, for example, a program storage area and a data storage area. For instance, programs for processing a locking status of the lock 158, 258, 358, 458, 1158, 1258 may be stored in the memory storage 1325. The memory storage 1325 may include embedded multimedia card (eMMc) memory for storing associated programs/firmware, etc. However, other memory types are also contemplated as required for a given application. In some instances, the captured and processed images may be saved to another location or device, such as on a Micro SD card or other memory storage devices required for a given application. The program storage area and the data storage area may include combinations of different types of memory, for example read-only memory and random-access memory.

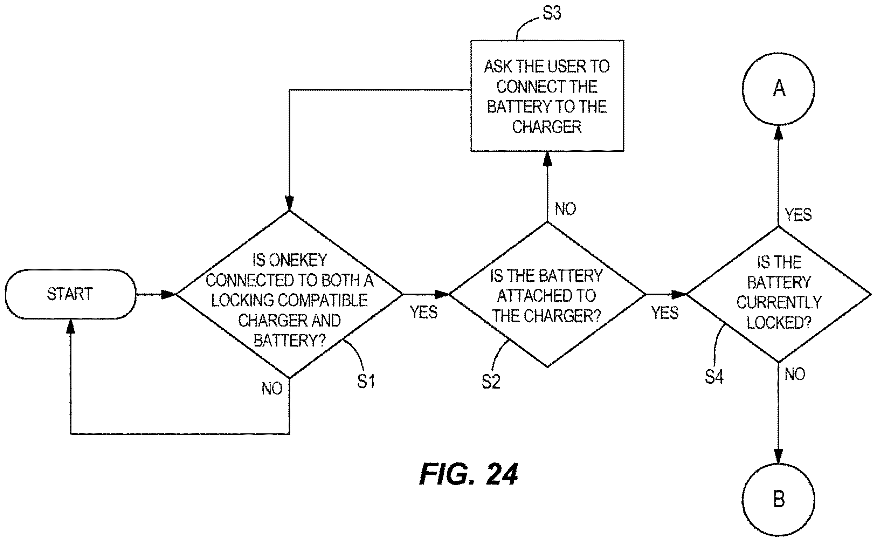

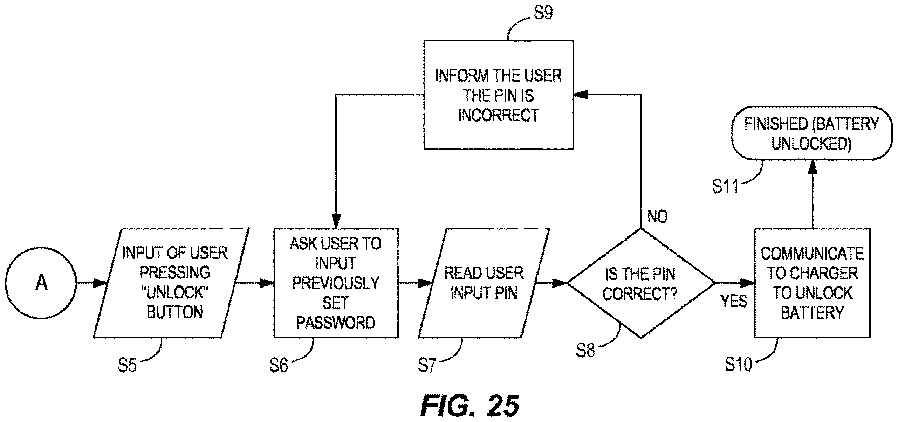

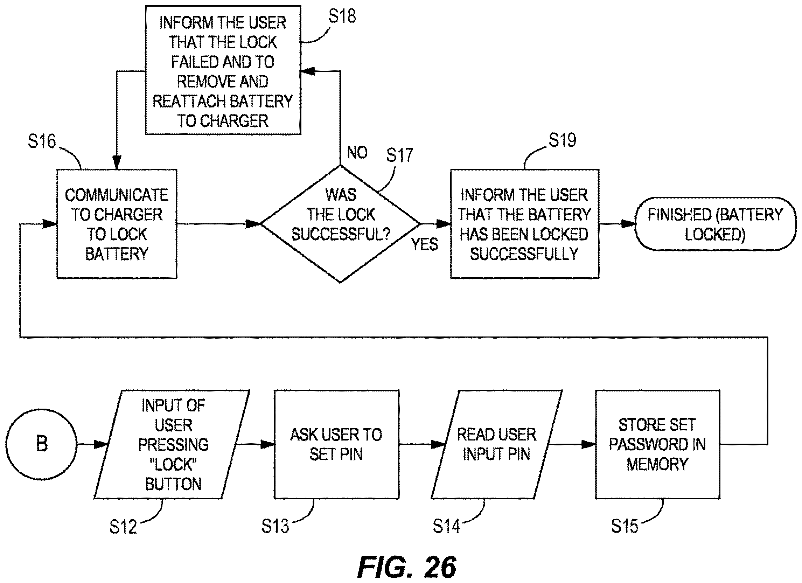

In operation, the system may perform a method such as the method 2400 shown in FIGS. 24-26. The method 2400 is an exemplary method 2400 of locking the battery pack 14A, 14B to the battery charger 10, 110, 210, 310, 1010, 1110 of any of the previous embodiments. Portions of the method 2400 may be performed automatically by the electronic processor 1315 in some embodiments. While portions of the operational process or method are discussed in a certain order, this order is not intended to be limiting and steps of the method may be moved around or repeated as needed by the operator.

A user may first place the battery pack 14A, 14B in the charging bay 132, 232, 332, 432, 1132, 1232. The user may open the tool management application 1304 on the remote device 1302. Opening the tool management application 1304 allows the user to connect the tool management application 1304 to both the lock 158, 258, 358, 458, 1158, 1258 and the battery pack 14A, 14B. Thereafter, the tool management application 1304 checks that the tool management application 1304 is correctly connected to both the lock 158, 258, 358, 458, 1158, 1258 and the battery pack 14A, 14B (Step S1). If the tool management application 1304 determines that both the lock 158, 258, 358, 458, 1158, 1258 and the battery pack 14A, 14B are not connected to the tool management application 1304, the method 2400 returns to Step S1. In response to determining that the tool management application 1304 is correctly connected to the lock 158, 258, 358, 458, 1158, 1258 and the battery pack 14A, 14B, the tool management application 1304 checks if the battery pack 14A, 14B is attached to the charger 10, 110, 210, 310, 1010, 1110 (Step S2). If the battery pack 14A, 14B is not attached to the charger 10, 110, 210, 310, 1010, 1110, the tool management application 1304 prompts the user to connect the battery 14A, 14B to the charger 10, 110, 210, 310, 1010, 1110 (Step S3). If the battery pack 14A, 14B is attached to the charger 10, 110, 210, 310, 1010, 1110, the tool management application checks if the battery 14A, 14B is locked (Step S4).

In response to the tool management application 1304 determining that the battery pack 14A, 14B is locked to the battery charger 10, 110, 210, 310, 1010, 1110, the tool management application illuminates an unlock button (not shown) for the user to press (Step S5). In response to the user pressing the unlock button, the tool management application 1304 prompts the user to input a previously set password (Step S6). In response to the user inputting a password, the tool management application reads the user input password (Step S7) and determines whether the user input password is correct or incorrect (Step S8). In response to an incorrect password being input, the tool management application 1304 informs the user that the password is incorrect (Step S9) and returns to Step S6. In response to a correct password being input, the tool management application 1304 communicates with the electronic processor 1315 to unlock the battery pack 14A, 14B (Step S10). Thereafter, the electronic processor 1315 controls the electric actuator 1334 to unlock the battery pack 14A, 14B, allowing the user to remove the battery pack 14A, 14B from the battery charger 10, 110, 210, 310, 1010, 1110 (Step S11).

In response to the tool management application 1304 determining that the battery pack 14A, 14B is unlocked, the tool management application 1304 illuminates a lock button 1330 for the user to press (Step S12). In response to the user pressing the lock button 1330, the tool management application 1304 prompts the user to set a password (Step S13). In response to the user setting the password, the tool management application 1304 reads the user input password (Step S14) and stores the password in the memory storage 1325 (Step S15). In response to storing the password in the memory storage 1325, the tool management application 1304 communicates with the electronic processor 1315 to lock the battery pack 14A, 14B (Step S16). Thereafter, the electronic processor 1315 controls the electric actuator 1334 to attempt to lock the battery pack 14A, 14B to the battery charger 10 (this may be referred to as a "locking operation"). Once the electric actuator 1334 has attempted to lock the battery pack 14A, 14B, the electronic processor 1315 determines whether the battery pack 14A, 14B was successfully locked (Step S 17). In response to the electronic processor 1315 determining that the battery pack 14A, 14B was not successfully locked, the tool management application 1304 informs the user that the locking operation failed and prompts the user to remove and reattach the battery 14A, 14B from the charger 10 (Step S18) and returns to Step S15. In response to the electronic processor 1315 determining that the battery pack 14A, 14B was successfully locked to the charger 10, 110, 210, 310, 1010, 1110, the tool management application 1304 informs the user that the locking operation was successful (Step S19).

The tool management application 1304 and the electric actuator 1334 may allow for alternate locking mechanisms to be contemplated. For example, in some embodiments a lock may be included within the battery 14A, 14B. In other words, an electronically actuated post may be located within the user engagement portion 94 of the battery 14A, 14B. The post may be configured to prevent, or resist, the user engagement portion 94 from being depressed when the battery 14A, 14B is locked via the tool management application 1304. In such an embodiment, the post may only be actuatable in response to communication from the tool management application 1304. Alternately, a hook may be located on a surface of the battery 14A, 14B to resist removal of the battery 14A, 14B. The hook may be disposed adjacent the user engagement portion 94.

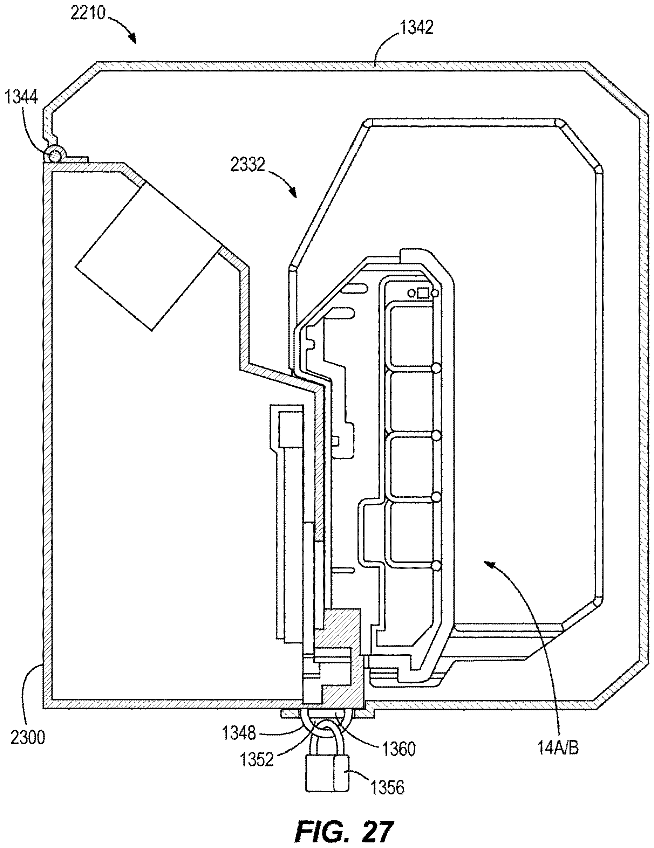

FIG. 27 illustrates a charger according to another embodiment of the disclosure. The charger 2210 is like the charger 210 shown in FIG. 9 and described above. Therefore, like features are identified with like references numerals plus "2000", and only the differences between the two will be discussed.

The charger 2210 has a charger housing 2300 including a plurality of charging bays 2332 each configured to receive the battery pack 14A, 14B. The battery pack 14A, 14B may be fully covered by a locking cover 1342 to prevent a user from accessing any part of the battery 14A, 14B. In other words, when the battery 14A, 14B is received in a charging bay 2332 configured to receive the battery pack 14A, 14B, the locking cover 1342 may extend over and cover the entirety of the battery pack 14A, 14B, thereby preventing a user from removing the battery 14A, 14B. The locking cover 1342 may include a hinge 1344 about which the locking cover 1342 rotates. The charger housing 2300 may include a lock projection 1348 extending transverse to the plane of a bottom wall of the charger housing 2300 and lateral to a battery insertion direction 2333. The lock projection 1348 includes a bore 1352 allowing for insertion of a padlock 1356. The locking cover 1342 may include a lock aperture 1360, through which the lock projection 1348 extends. In some embodiments, the locking cover 1342 covers multiple battery packs 14A, 14B. In some embodiments, the locking cover 1342 covers a single battery 14A, 14B. In yet other embodiments, the locking cover 1342 may only cover the user engagement portion 94 of the battery pack 14A, 14B.

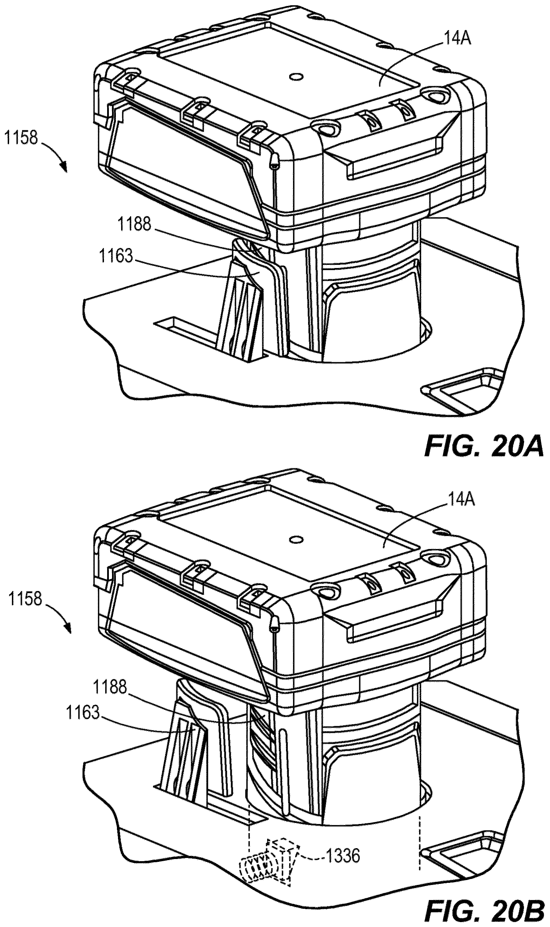

In some embodiments, the member 162, 262, 363, 462, 1162, 1262 may be a spring loaded or otherwise biased pin 1336 (see e.g., FIG. 20B). Accordingly, the member 162, 262, 363, 462, 1162, 1262 may extend from the charger 10, 110, 210, 310, 1010, 1110 to prevent, or resist, the battery latch 98 from being depressed internally. The member 162, 262, 363, 462, 1162, 1262 may be the pin 1336 or the pin 1336 may be provided in addition to the member 162, 262, 363, 462, 1162, 1262. Alternately or additionally, the member 162, 262, 363, 462, 1162, 1262 may be a moveable tab, or retractable member 1338, provided on the charger 10, 110, 210, 310, 1010, 1110 to prevent pullout of the battery 14A, 14B (see e.g., FIG. 5). For instance, the battery pack 14A, 14B of FIG. 15 may include a recess 1340 configured to engage the retractable member 1338. Upon locking, the retractable member 1338 may be configured to enter the recess 1340 to lock the battery pack 14A, 14B in place.

Alternatively or additionally, a moveable hook may be provided on the battery 14A, 14B surface to prevent, or resist, battery pullout from the battery charger 10, 110, 210, 310, 1010, 1110. In such an embodiment, the moveable hook would be placed behind, and in contact with the existing battery latch 98 to prevent the battery 14A, 14B from being pulled out completely. The moveable hook may be electronically or otherwise actuatable.

In yet other embodiments, the battery pack 14A, 14B may be provided with a protrusion, preventing the battery pack 14A, 14B from being removed from the charger 10, 110, 210, 310, 1010, 1110 when the charger 10, 110, 210, 310, 1010, 1110 is locked.

Providing a lock 158, 258, 358, 458, 1158, 1258 on a battery charger 10, 110, 210, 310, 1010, 1110 provides various advantages. For example, physically locking a battery 14A, 14B may give a user an extra sense of security. Additionally, locking the battery 14A, 14B allows a user to prevent co-workers on a job site from using the battery pack 14A, 14B. Accordingly, the lock 158, 258, 358, 458, 1158, 1258 allows the user extra peace of mind. Accordingly, the user would know that the battery 14A, 14B would still be there ready for use, once done charging. Locking battery packs 14A, 14B may also be a theft deterrent. A case may arise where a user does not want to completely lock up their chargers and packs in their tool crib. Locking the battery 14A, 14B to the charger 10, 110, 210, 310, 1010, 1110 may serve as an extra theft deterrent. Additionally, if transporting batteries 14A, 14B while charging, locking the batteries 14A, 14B to the charger 10, 110, 210, 310, 1010, 1110 allows an extra mechanism to prevent the battery 14A, 14B from easily coming off the charger 10, 110, 210, 310, 1010, 1110.

Although the disclosure has been described with reference to certain preferred aspects, variations and modifications exist within the scope of one or more independent aspects of the disclosure as described. When used in this specification and claims, the terms "comprises" and "comprising" and variations thereof mean that the specified features, steps or integers are included. The terms are not to be interpreted to exclude the presence of other features, steps or components.

Various features and advantages of the disclosure are set forth in the following claims.

### REPRESENTATIVE FEATURES

Representative features are set out in the following clauses, which stand alone or may be combined, in any combination, with one or more features disclosed in the text and/or drawings of the specification.
1. A charger for use with a battery pack having a latch, the charger comprising:
   a charging bay defining a battery path; and
   a lock including a member retractably extending into the charging bay transverse to the battery path, the member positioned to overlap with the latch in the battery path regardless of a position of the latch lateral to the battery path.
2. The charger of clause 1, further comprising an electric actuator configured to actuate the lock, wherein actuating the lock extends the member into the charging bay.
3. The charger of clause 2, wherein the lock includes a wireless transceiver configured to wirelessly communicate commands and data between an electronic processor of the charger and a remote device.
4. The charger of clause 1, wherein
   the lock includes a user interface, and
   actuating the user interface extends the member into the charging bay.
5. The charger of clause 4, wherein the user interface is biased by a spring force toward an unlocked position in which the member does not extend into the charging bay.
6. The charger of clause 5, further comprising a stop member configured to prevent the user interface from moving to the unlocked position automatically.
7. The charger of clause 6, wherein the stop member pivots about a hinge and a lock aperture through which a lock projection extends, the lock projection configured to receive a padlock.
8. The charger of clause 1, further comprising
   a housing including a lock projection extending in a direction along the battery path, and wherein
   the lock includes a user interface having a first bore defined therein,
   the lock projection includes a second bore defined therein, and
   the first bore and the second bore are alignable such that a padlock can be inserted therethrough.
9. A charger for use with a battery pack having a latch, the charger comprising:
   a charging bay defining a battery path; and
   a lock including a member extending in a direction along the battery path, the member freely moveable in a first direction toward the charging bay such that the member is positionable to obstruct access to a user engagement portion of the latch, the first direction extending transverse to the battery path, the member selectively moveable in a second direction upon disengagement of the lock, the second direction extending opposite the first direction.
10. The charger of clause 9, wherein the member is substantially L-shaped and includes a first portion extending in the direction along the battery path and a second portion extending in a direction transverse to the battery path.
11. The charger of clause 10, wherein
   the second portion of the member includes a plurality of teeth defined thereon, and
   the charger further comprises a pawl in ratcheting engagement with the plurality of teeth.
12. A charger for use with a battery pack, the charger comprising:
   a charging bay defining a battery path; and
   a lock including a member extending in a lock direction transverse to the battery path, the member moveable in the lock direction toward the charging bay, the member positionable to overlap with the battery path, the member selectively moveable in an unlock direction extending opposite the lock direction.
13. The charger of clause 12, wherein
   the lock includes a plurality of teeth defined thereon, and
   the charger further comprises a pawl in ratcheting engagement with the plurality of teeth.
14. The charger of clause 13, wherein the pawl is removable from engagement with the plurality of teeth.
15. The charger of clause 12, wherein the member is configured to rotate about a member axis, the member axis extending in a direction transverse to the direction the member extends.
16. The charger of clause 12, wherein the member includes a wedge and a handle.
17. The charger of clause 16, wherein the lock includes a spring configured to bias the wedge in the unlock direction.
18. The charger of clause 12, wherein the unlock direction and the lock direction are either opposing linear directions or opposing rotational directions.
19. The charger of clause 12, wherein
   the member includes a second member,
   the lock further includes a first member moveable into a position at least partially overlapping with the second member along the unlock direction.
20. The charger of clause 19, wherein the second member further comprises a latch.

## Claims

1. A charger for use with a battery pack having a latch, the charger comprising:
a charging bay defining a battery path; and
a lock including a member retractably extending into the charging bay transverse to the battery path, the member positioned to overlap with the latch in the battery path regardless of a position of the latch lateral to the battery path.

2. The charger of claim 1, further comprising an electric actuator configured to actuate the lock, wherein actuating the lock extends the member into the charging bay.

3. The charger of any preceding claim, wherein the lock includes a wireless transceiver configured to wirelessly communicate commands and data between an electronic processor of the charger and a remote device.

4. The charger of any preceding claim, wherein
the lock includes a user interface, and
actuating the user interface extends the member into the charging bay.

5. The charger of claim 4, wherein the user interface is biased by a spring force toward an unlocked position in which the member does not extend into the charging bay.

6. The charger of claim 5, further comprising a stop member configured to prevent the user interface from moving to the unlocked position automatically; optionally
wherein the stop member pivots about a hinge and a lock aperture through which a lock projection extends, the lock projection configured to receive a padlock.

7. The charger of any preceding claim, further comprising
a housing including a lock projection extending in a direction along the battery path, and wherein
the lock includes a user interface having a first bore defined therein,
the lock projection includes a second bore defined therein, and
the first bore and the second bore are alignable such that a padlock can be inserted therethrough.

8. A charger for use with a battery pack having a latch, the charger comprising:
a charging bay defining a battery path; and
a lock including a member extending in a direction along the battery path, the member freely moveable in a first direction toward the charging bay such that the member is positionable to obstruct access to a user engagement portion of the latch, the first direction extending transverse to the battery path, the member selectively moveable in a second direction upon disengagement of the lock, the second direction extending opposite the first direction.

9. The charger of claim 8, wherein the member is substantially L-shaped and includes a first portion extending in the direction along the battery path and a second portion extending in a direction transverse to the battery path; optionally
wherein
the second portion of the member includes a plurality of teeth defined thereon, and
the charger further comprises a pawl in ratcheting engagement with the plurality of teeth.

10. A charger for use with a battery pack, the charger comprising:
a charging bay defining a battery path; and
a lock including a member extending in a lock direction transverse to the battery path, the member moveable in the lock direction toward the charging bay, the member positionable to overlap with the battery path, the member selectively moveable in an unlock direction extending opposite the lock direction.

11. The charger of claim 10, wherein
the lock includes a plurality of teeth defined thereon, and
the charger further comprises a pawl in ratcheting engagement with the plurality of teeth; optionally
wherein the pawl is removable from engagement with the plurality of teeth.

12. The charger of claim 10 or claim 11, wherein the member is configured to rotate about a member axis, the member axis extending in a direction transverse to the direction the member extends.

13. The charger of any one of claims 10 to 12, wherein the member includes a wedge and a handle; optionally
wherein the lock includes a spring configured to bias the wedge in the unlock direction.

14. The charger of any one of claims 10 to 13, wherein the unlock direction and the lock direction are either opposing linear directions or opposing rotational directions.

15. The charger of any one of claims 10 to 14, wherein
the member includes a second member,
the lock further includes a first member moveable into a position at least partially overlapping with the second member along the unlock direction; optionally
wherein the second member further comprises a latch.
